# EUROPEAN PATENT APPLICATION

(11) **EP 3 838 663 A1**
(43) Date of publication of application: **23.06.2021**
(21) Application number: 20211446.8
(22) Date of filing: 03.12.2020
(51) Int. Cl.: B60N 2/70, A47C 7/18, B60R 22/26, B60N 2/68, B60R 22/22

(54) **VEHICLE BENCH SEAT CUSHION**

(30) Priority: 19.12.2019 GB 201918870
(71) Applicant: Nissan Motor Manufacturing (UK) Ltd, Bedford Bedfordshire MK43 0DB (GB)
(72) Inventor: BLACK, Christian, Bedford, Bedfordshire MK43 0DB (GB)

(57) **Abstract**

A vehicle bench seat seat belt buckle (14) is anchored by a webbing strap (18) to an anchor (16) and projects from a seat cushion (10); which comprises upholstered foam (12). A buckle mounting arrangement (20A) comprises an aperture (22) through the foam through which the webbing strap passes; and at least one recess (34, 36) in the foam adjacent to said aperture. The recess(es) enable the foam to deform so that the buckle (14) passes upwardly through the aperture (22) during vehicle assembly (Fig. 4); but the aperture (22) shrinks after assembly, so that the buckle cannot fall down below the cushion. The mounting arrangement may comprise a slot which opens at the rear of the cushion. The webbing strap (18) can then be fed into the slot from the rear, without passing the buckle (14) through the slot.

## Description

### Technical Field of the Invention

The present invention relates to arrangements for holding a seat belt buckle in position relative to a bench seat cushion in a vehicle. Aspects of the present invention relate to a vehicle; to a bench type seat cushion for a vehicle; and to a method of assembling a bench type seat cushion into a vehicle.

### Background to the Invention

Motor vehicles sometimes have a bench type seat in which a single unitary cushion assembly or squab extends laterally in an interior space of the vehicle to provide seating surfaces for two or more people. Bench seats are often used in the rear of a motor car; but are also used in utility vehicles as the only seat, or as a front seat.

Nearly all vehicles are fitted with seat belts (sometime referred to as safety belts) in which a tongue mounted on a belt is releasably latched into a seat belt buckle, usually located adjacent to the inner side of the person wearing the seat belt (as opposed to an outer side, facing an outer body panel). With a bench type seat, seat belt buckles often extend through and protrude above the seat cushion assembly in order to be accessible for latching during ingress by an occupant; or when installing a universal type child restraint system. Where buckles protrude wholly above the seat cushion and/or lie on the cushion, they may impair the comfort of the occupant(s) of the seat. It is impractical to insert a seat belt tongue into a buckle which is lying horizontally on a seat cushion - the buckle must be picked up first, making seat belt latching an inconvenient, two-handed operation.

The seat cushion is normally assembled into a vehicle in production after the seat belt buckle is attached to an anchorage; so the buckle must be able to pass upwards through an aperture in the cushion during fitting. However, the buckles must be resistant to being pushed back through the cushion if a force is applied to them in an unlatched condition. In a common type of seat belt buckle, a flexible webbing strap is used to connect the buckle to an anchor. This type of seat belt buckle will be referred to herein as a "webbing type seat belt buckle". Such webbing straps are normally too flexible to hold the buckle upright; nor can they prevent the buckle being pushed back through the cushion. Various solutions to this problem are known. One known solution is the use of a braided steel cable - instead of a webbing strap - to attach the buckle to an anchor point. A braided steel cable is stiffer in compression than a webbing strap, and is able to hold the buckle above the cushion. However, a braided steel cable is more expensive than a webbing strap; and has a significantly higher mass. A further known solution is to use an injection moulded polymer boot or sleeve fitted around the webbing strap to hold the buckle in position. The use of a sleeve increases the overall number of parts required, adding to the complexity of assembly; and increasing manufacturing and assembly costs.

There is, then, a need for an alternative solution to the problem of retaining a webbing type seat belt buckle in position relative to a bench seat cushion which overcomes, or at least mitigates, some or all of the drawbacks of the known solutions.

### Summary of the Invention

According to a first aspect of the invention, there is provided a vehicle comprising a bench type seat having a seat cushion and a webbing type seat belt buckle projecting from the cushion, wherein the cushion comprises an upholstered foam cushion, the cushion also comprising a mounting arrangement for the webbing type seat belt buckle, the mounting arrangement comprising an aperture extending through the upholstered foam cushion and opening at an upper surface of the upholstered foam cushion through which a webbing strap connecting the seat belt buckle to an anchor point passes; and at least one recess defined in the material of the foam cushion proximal to but spaced from said aperture; wherein the aperture has a dimension measured in a first direction which is less than a corresponding dimension of the seat belt buckle when the material of the foam cushion between the aperture and the at least one recess is in an initial configuration, the material of the foam cushion between the aperture and the at least one recess being resiliently deformable from its initial configuration to increase said dimension of the aperture in said first direction. The first direction may be across the vehicle, for example along an axis from the centre of a right-hand vehicle door to the centre of a corresponding left-hand vehicle door.

In use when assembling the seat cushion to the vehicle, the material of the foam cushion between the aperture and the at least one recess is able to deform from its initial configuration to allow the seat belt buckle to pass through the aperture, the material of the foam cushion between the aperture and the at least one recess returning to substantially its initial configuration once the seat belt buckle has passed fully through the aperture.

In an embodiment, the arrangement is configured such that, in use, the material of the foam cushion surrounding the aperture resists entry of the seat belt buckle into the aperture from above.

In an embodiment, an upper surface of the material of the foam cushion between the aperture and the recess is spaced below an uppermost surface of the foam cushion surrounding the at least one recess. This forms a recessed pocket in the uppermost surface of the cushion in which the seat belt buckle rests when in a "ready for use" position. Hence, the upper end of the webbing strap to the buckle would terminate below an uppermost surface of the seat cushion surrounding the at least one recess.

The width of the aperture may be smaller than the width of the seat belt buckle. The width of the aperture may be smaller than the length of the seat belt buckle.

In an embodiment, the at least one recess consists of a single recess extending along at least one side of the aperture. The recess may partially surround the aperture on at least three sides.

In an alternative embodiment, the at least one recess comprises a pair of discrete recesses defined in the material of the foam cushion, one either side of the aperture in said first direction.

The foam cushion material between the aperture and the, or each, recess may be in the form of a block of material. The block of material may be flexible. The block of material may be separated from the remainder of the foam material at an inner, or forward end; and/or at an outer, or rearward end of the block.

The aperture and/or the at least one recess may open at a rear end face of the foam cushion.

The vehicle may have a plurality of webbing type seat belt buckles projecting from the cushion. The cushion may have a plurality of mounting arrangements for the webbing type seat belt buckles.

An adjacent pair of seat belt buckles may be supported using a common mounting arrangement.

In an embodiment, the bench type seat cushion defines three seating surfaces - a central seating surface and an outer seating surface on either side of the central seating surface - the cushion comprising respective mounting arrangements located between the central seating surface and each of the outer seating surfaces; and wherein at least one webbing type seat belt buckle is received in each mounting arrangement. There may be a pair of adjacent seat belt buckles supported in one of said mounting arrangements.

The, or each, recess may open at an upper surface of the foam cushion.

In accordance with a second aspect of the invention, there is provided a seat cushion for a bench type seat in an associated vehicle, the cushion having an upholstered foam cushion and a mounting arrangement for enabling a webbing type seat belt buckle of the associated vehicle to be inserted through the upholstered foam cushion and supported in a ready for use position above the upholstered foam cushion, the mounting arrangement comprising an aperture extending through the upholstered foam cushion and opening at an upper surface of the upholstered foam cushion, at least one recess being defined in the foam cushion proximal to but spaced from said aperture, wherein the aperture has a first dimension measured in a first direction when the material of the foam cushion between the aperture and the at least one recess is in an initial configuration, the material of the foam cushion between the aperture and the at least one recess being able to deform resiliently from its initial configuration to increase said first dimension of the aperture in said first direction.

The seat cushion may be configured such that in use during assembly to the associated vehicle, the material of the foam cushion between the aperture and the at least one recess is able to deform resiliently from its initial configuration to permit a seat belt buckle of the associated vehicle to pass upwardly through the aperture; and to return to its initial configuration once the seat belt buckle has passed fully through the aperture.

In an embodiment, an upper surface of the material of the foam cushion between the aperture and the recess is spaced below an uppermost surface of the foam cushion surrounding the at least one recess. This forms a recessed pocket in the uppermost surface of the cushion in which the seat belt buckle rests when in a "ready for use" position.

In an embodiment, the at least one recess consists of a single recess extending along at least one side of the aperture. The recess may partially surround the aperture on at least three sides.

In an alternative embodiment, the at least one recess comprises a pair of discrete recesses defined in the material of the foam cushion, one either side of the aperture in said first direction.

The, or each, recess may open at an upper surface of the foam cushion.

The seat cushion may comprise a plurality of said mounting arrangements.

In an embodiment, the bench type seat cushion defines three seating surfaces, a central seating surface and an outer seating surface on either side of the central seating surface, the cushion comprising respective mounting arrangements between the central seating surface and each of the outer seating surfaces.

In accordance with a third aspect of the invention, there is provided a method of assembling the bench type seat cushion into a vehicle according to the first aspect of the invention, the method comprising: inserting the seat belt buckle into the aperture and pulling the seat belt buckle upwardly through the aperture as the cushion is moved into position in the vehicle until the buckle emerges from the aperture with the cushion located in a desired position in the vehicle.

Where the vehicle has more than one webbing type seat belt buckle associated with the bench type seat, the method may comprise inserting each of the seat belt buckles into an aperture of a mounting arrangement, and drawing all the seat belt buckles through their respective apertures whilst the cushion is being moved into position.

In accordance with a fourth aspect of the invention, there is provided a vehicle comprising a bench type seat having a seat cushion and at least one webbing type seat belt buckle projecting from the cushion, wherein the cushion comprises an upholstered foam cushion, the cushion also comprising a mounting arrangement for the webbing type seat belt buckle, the mounting arrangement comprising a slot extending through the upholstered foam cushion and opening at a rear end face of the upholstered foam cushion through which a webbing strap connecting the seat belt buckle to an anchor point passes, and wherein the slot has at least one dimension smaller than a corresponding dimension of the seat belt buckle.

In an embodiment, a recessed pocket for receiving the seat belt buckle is defined in the uppermost surface of the upholstered foam cushion surrounding the slot.

In an embodiment, the bench type seat cushion defines three seating surfaces, a central seating surface and an outer seating surface on either side of the central seating surface, the cushion comprising a respective one of said mounting arrangements and at least one seat belt buckle between the central seating surface and each of the outer seating surfaces.

In accordance with a fifth aspect of the invention, there is provided a seat cushion for a bench type seat in in an associated vehicle, wherein the seat cushion comprises an upholstered foam cushion, the cushion also comprising a mounting arrangement for a webbing type seat belt buckle, the mounting arrangement comprising a slot extending through the upholstered foam cushion and opening at a rear end face of the upholstered cushion.

The slot may have at least one dimension that is smaller than a corresponding dimension of the seat belt buckle. The width of the slot may be smaller than the width of the seat belt buckle. The width of the slot may be smaller than the length of the seat belt buckle.

In an embodiment, a recessed pocket for receiving a seat belt buckle of the associated vehicle is defined in the uppermost surface of the upholstered foam cushion surrounding the slot.

In an embodiment, the bench type seat cushion defines three seating surfaces, a central seating surface and an outer seating surface on either side of the central seating surface, the cushion comprising respective mounting arrangements between the central seating surface and each of the outer seating surfaces; and wherein at least one webbing type seat belt buckle is received in each mounting arrangement.

In accordance with a sixth aspect of the invention, there is provided a method of assembling the bench type seat cushion in a vehicle according to the fourth aspect of the invention, the method comprising: positioning the seat belt buckle above an upper surface of the cushion and feeding the webbing strap into the slot as the cushion is moved into position in the vehicle until the cushion is located in a desired position in the vehicle with the buckle supported on the cushion above the slot.

The slot may be dimensioned to resist entry for the seat belt buckle into the slot from above. The slot may have at least one dimension which is smaller than an equivalent dimension of the seat belt buckle. The width of the slot may be smaller than the width of the seat belt buckle. The width of the slot may be smaller than the length of the seat belt buckle.

Where the vehicle has more than one webbing type seat belt buckle associated with the bench type seat, the method may comprise positioning each seat belt buckle above an upper surface of the cushion and feeding each webbing strap into a slot of an associated mounting arrangement as the cushion is moved into position in the vehicle until the cushion is located in a desired position in the vehicle with each buckle supported on the cushion above its respective slot.

In all aspects and embodiments of the invention, the seat belt buckle is located in use in a pocket in the seat cushion, so that the majority of the buckle is located within the seat; but a top surface of the buckle is visible, standing just proud of (or above) the top surface of the seat cushion so that it can be located by feel, without having to look; even if three people are sitting across the bench seat. Furthermore, the tongue release button on top of the buckle is not shrouded; it is easy to see, reach, and operate. The buckle is firmly supported on its underside, so that it does not move significantly downwards as the seat belt tongue is inserted; its installation is assymetric - easy to install, but hard to dislodge.

In all aspects and embodiments of the invention, the at least one recess may be parallel to; and laterally offset from; the aperture in the seat cushion. The or each recess may be of substantially the same width as the aperture. The or each recess may be of substantially the same length as the aperture.

### Detailed Description of the Invention

In order that the invention may be more clearly understood, embodiments thereof will now be described - by way of example only - with reference to the accompanying drawings, of which:
- Figure 1: is a schematic perspective view from the rear of part of a foam cushion forming part of a bench seat cushion for a bench type seat in a vehicle, illustrating a mounting arrangement for a webbing type seat belt buckle;
- Figure 2: is a schematic sectional elevation through the foam cushion of figure 1 taken on line II-II of figure 3 and also showing the webbing type seat belt buckle attached to an anchor point in a vehicle;
- Figure 3: is a schematic plan view from above of the foam cushion of figures 1 and 2 taken on arrow III of figure 2, with the position of the seat belt buckle shown in ghost;
- Figure 4: is a schematic cross-sectional view through part of the foam cushion of figures 1 to 3 illustrating a seat belt buckle being drawn up through an aperture forming part of the mounting arrangement;
- Figure 5: is a schematic plan view from above of the mounting arrangement of figures 1 to 4 showing two adjacent seat belt buckles in a "ready for use" position above the cushion;
- Figure 6: is a view similar to that of Figure 1 but showing an alternative embodiment of a mounting arrangement for a webbing type seat belt buckle; and
- Figure 7: is a view similar to Figure 1, showing a mounting arrangement part covered in cloth upholstery.

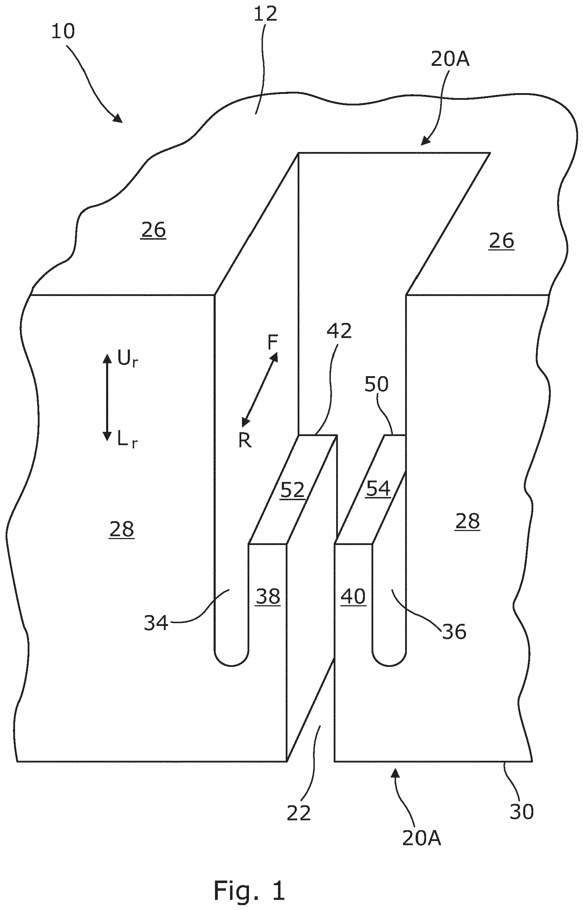

Part of a seat cushion 10 of a bench type seat in a motor vehicle is shown in Figure 1. The seat cushion 10 provides seating surfaces for two or more occupants of a vehicle; and in use extends transversely across the vehicle within the interior passenger cabin. In a common arrangement, the seat cushion defines three seating surfaces, two outer seating surfaces either side of a central seating surface. Typically, such bench type seat cushions are used as a rear seat in a motor car; but they can also be used as a front seat, especially in a utility vehicle.

In the description that follows, the terms "forwards", "backwards", "fore", "aft", "forwardmost", "rearmost", "rear", and the like are used to describe positions or locations of features of the seat cushion relative to a vehicle in which it is mounted in use. For example, the terms "forwards" and "forwardmost" refer to locations or positions towards or nearer the front of the vehicle, and "backwards" and "rearmost" refer to locations or positions towards or nearer the rear of the vehicle. (see also arrows F and R in Figure 1; also arrows Uᵣ for Upper and Lᵣ for Lower)

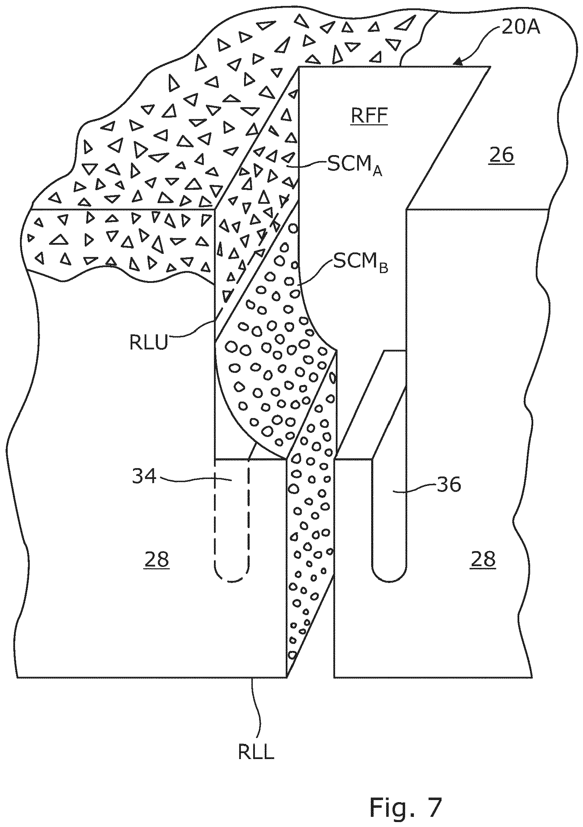

The seat cushion 10, sometimes called a squab, will typically include an armature or supporting frame (not shown), which may be made of metal or plastic and which may comprise springs, a foam cushion 12, and an outer cover (shown in part in Figure 7). The outer cover extends over the uppermost and side surfaces of the foam cushion 12, and partly underneath the foam; so that when the seat cushion is fitted in the vehicle, the foam cushion is not exposed. The outer cover may be made of leather or fabric (or other materials), and may have a thin layer of foam on its inner surface. The foam cushion 12 defines a main body of the cushion 10 which supports occupants of the seat. The foam cushion 12 may be a moulded component. The foam cushion 12 may be moulded using a single shot process with the same material throughout. Alternatively, the foam cushion may be moulded using a multiple shot moulding process from two or more foam materials of different densities to provide the required levels of support and comfort.

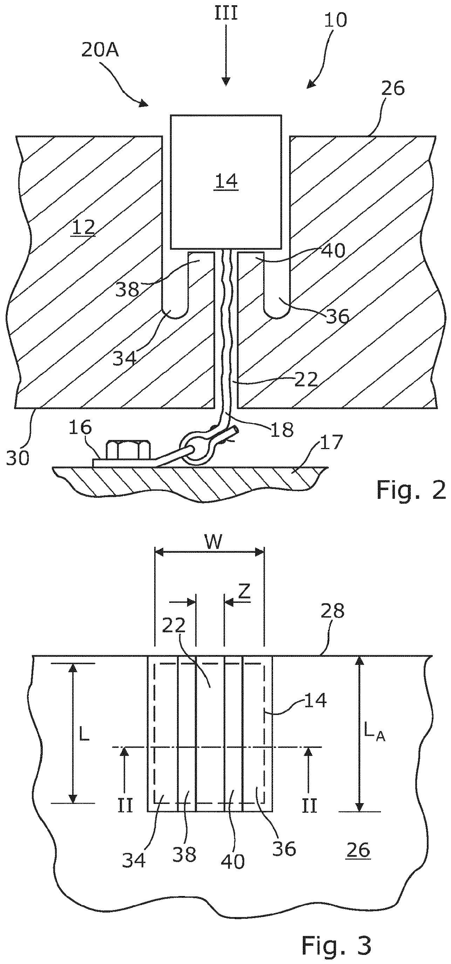

The vehicle has seat belt buckles 14 (Fig. 2), each attached to an anchor point 16 in a vehicle 17 by a webbing strap 18. In a vehicle where the rear bench seat provides three seating surfaces, there are three seat belt buckles 14 associated with the rear seat, one for each seating surface. In a common arrangement, two of the seat belt buckles 14 are located adjacent to one another between the central seating surface and a first of the outer seating surfaces; and the other seat belt buckle is located between the central seating surface and the other of the outer seating surfaces. The seat belt buckles 14 are usually secured to their anchor points 16 before the seat cushion 10 is assembled into the vehicle. When fitting the seat cushion 10, it is necessary to guide the seat belt buckles into their correct positions on top of the seat cushion 10.

In accordance with an aspect of the invention, the seat cushion 10 has mounting arrangements 20 which enable the seat belt buckles 14 to be inserted through the cushion 10 when assembling the cushion 10 into the vehicle; and which support the seat belt buckles in a "ready for use" position in which they are accessible from above the cushion.

A first mounting arrangement 20A is illustrated schematically in Figures 1 to 5. The first mounting arrangement 20A includes an aperture 22 which opens into a pocket, which in turn opens at an uppermost surface 26 of the cushion proximal to a rear end face 28 of the cushion. The aperture 22 and pocket may extend from a lower surface 30 of the cushion to the uppermost surface 26 generally vertically; but in some applications, the aperture and pocket may extend from a lower region of the rear end face 28 of the cushion to the uppermost surface. The foam cushion may be closed at the back of slot 22; or may be open at the back of the slot, as shown in the figures for ease of illustration. The precise arrangement will depend on the position of the seat belt anchor point 16 and the shape of the seat cushion. However, the aperture 22 should be configured to enable the seat belt buckle 14 to be located at a position where it is accessible from above the cushion, when the cushion 10 is fitted in the vehicle with the webbing strap 18 extending through the aperture to the anchor point 16.

Figures 1 to 6 show the aperture 22 extending through the foam cushion 12 with the outer cushion cover or upholstery omitted for clarity. However, for cosmetic reasons and to protect the outer surfaces of the foam cushion, the outer cover is arranged to extend into the aperture in the foam cushion so as to cover the surfaces of the foam cushion 12 within the aperture; whilst enabling the seat belt buckle 14 and webbing strap 18 to pass through the upholstered cushion. This will be explained later with reference to Figure 7.

As illustrated best in figure 3, the aperture 22 has a dimension Z measured in a first direction which is less than the corresponding dimension W of the seat belt buckle 14. In this case, the first direction is aligned generally with a lateral direction of the vehicle when the cushion is assembled to the vehicle. So it can be said that the aperture 22 has a width Z which is less than the width W of the seat belt buckle 14; so that once the seat cushion is fitted with the seat belt buckle 14 above the cushion as shown in figure 2, the seat belt buckle cannot be easily pressed down through the aperture 22; and the buckle is supported in its ready for use position. Indeed, the width Z of the aperture is also less than the length L of the buckle 14 so that the buckle is held above the cushion regardless of its orientation. In this embodiment, the length L_{A} of the aperture 22 measured perpendicular to the first direction, that is to say in a longitudinal direction of the vehicle from front to rear, is greater than the corresponding length L of the seat belt buckle. As illustrated, the aperture 22 may be open at the rear 28 of the foam cushion.

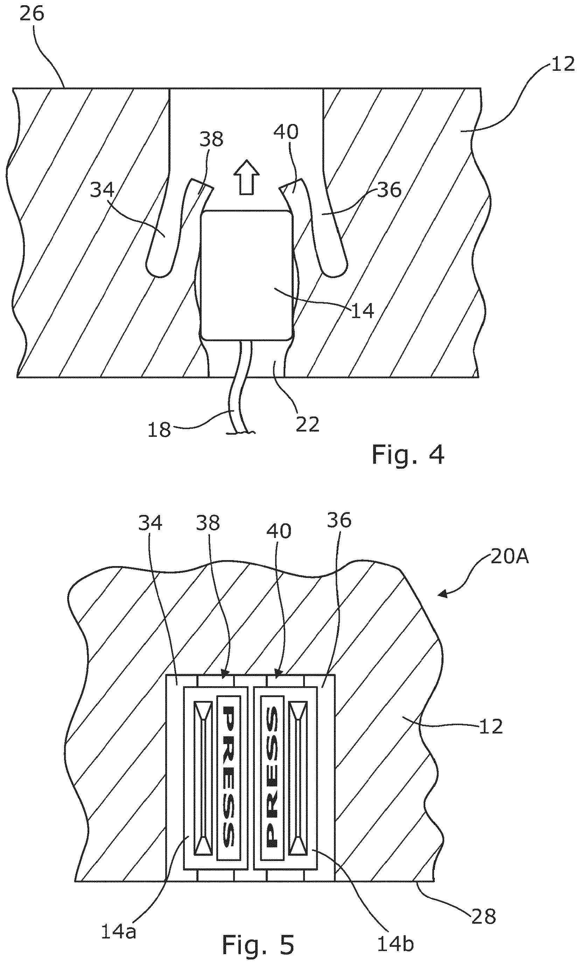

In order that the seat belt buckle 14 can be passed through the aperture 22 when the cushion is assembled to the vehicle, recesses 34, 36 are defined in the foam cushion, one on either side of the aperture 22 in the first direction. The recesses 34, 36 open at an upper surface of the foam cushion, at a lower level than the uppermost surface 26. The recesses 34, 36 extend over the full length of the aperture 22; and in this embodiment, are also open at the rear end face 28 of the foam cushion. The recesses 34, 36 are positioned close to; but spaced from; the aperture 22 so that there are flexible, deformable regions 38, 40 of foam cushion material between the aperture and each of the recesses 34, 36. The regions 38, 40 in this case can be described as blocks, being generally rectangular in shape. The recesses 34, 36 are configured to allow the foam cushion material either side of the aperture 22; and especially the blocks 38, 40 between the aperture 22 and the recesses; to be deformed from their initial configuration to allow a seat belt buckle 14 to pass upwardly through the aperture 22 as illustrated in Figure 4. Once a buckle 14 has passed through the aperture 22, the material 38, 40 either side of the aperture 22 will revert to its initial configuration so that the buckle 14 is not able to easily re-enter the aperture. The buckle 14 is held in a "ready for use" position (Figs. 2 and 3) by the blocks of material 38, 40 either side of the aperture 22.

The foam material in the foam cushion 12 provides a degree of cushioning; but is not sufficiently resilient that the seat belt buckle 14 could be forced through the aperture 22 without the presence of recesses 34, 36. These recesses enable the foam material either side of aperture 22 to resiliently deform under the force of the buckle 14 passing through the aperture when assembling the cushion to the vehicle. The resilience of the foam cushion material is sufficient that once the buckle 14 has passed through, the blocks 38, 40 will return to their initial positions in which the aperture 22 is narrower than the buckle.

The recesses 34, 36 extend to a sufficient depth that the buckle 14 can be inserted through the lower end of the aperture and may extend over at least 40%, or at least 50%, or at least 60%, or at least 80% of the depth of the foam cushion. To make it easier for the blocks 38, 40 to move, they may be separated from the rest of the foam cushion material at their inner or forward ends 42, 50 (Fig. 1) over at least part of their depth. Where the foam cushion 12 is moulded, the recesses 34, 36 and aperture 22 can be formed during foam moulding. Where the inner ends 42, 50 of the blocks 38, 40 are separated from the rest of the foam cushion, this may be achieved during moulding; or the material may be cut after moulding.

The upper surfaces 52, 54 of the blocks of material 38, 40 between the aperture 22 and the recesses 34, 36 are recessed below the uppermost surface 26 of the foam cushion 12 outside of the recesses. This forms a pocket in the uppermost surface of the cushion surrounding the aperture 22 in which the seat belt buckle 14 sits when not in use, supported from below by the blocks 38, 40. There may be sufficient slack in the webbing strap 18 to enable the buckle 14 to be lifted relative to the cushion by an occupant when fitting their seat belt, or when fitting a child seat.

When assembling the cushion 10 into the vehicle, a tool (not shown in the Figures) is used to pull the seat belt buckle 14 through the aperture 22. The tool may include a tongue for latching engagement in the seat belt buckle 14 attached to a length of webbing. The tongue is latched to the buckle 14, and the webbing is passed up through aperture 22 from below the cushion. The webbing of the tool is pulled tight from above the cushion to pull the buckle 14 up through the aperture 22 as the cushion is fitted. Once the cushion 10 is in place, the tongue is released.

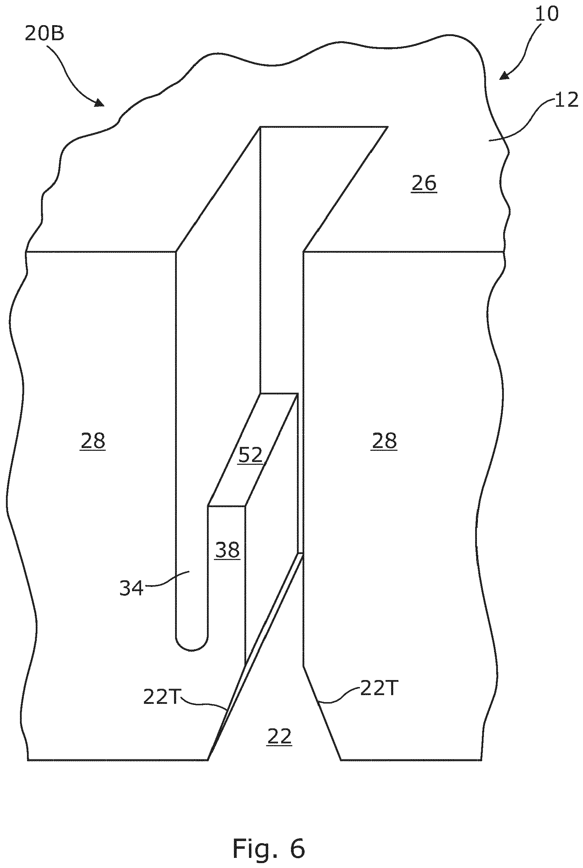

The first mounting arrangement 20A described above is particularly suitable where two seat belt buckles are located adjacent to one another, both being inserted through the same aperture 22. The blocks 38, 40 of foam cushion material on either side of the aperture 22 are able to deform to allow the two buckles to pass through. Once fully inserted, each buckle 14 will tend to sit above a respective one of the blocks 38, 40 of cushion material. Figure 5 is a plan view from above showing first and second seat belt buckles 14a, 14b in position above the cushion in the mounting arrangement 20A. However, where only a single seat belt buckle 14 is to be inserted through the aperture, it may be sufficient for the mounting arrangement to have only a single recess on one side of the aperture, as shown in Figure 6.

Figure 6 illustrates a second mounting arrangement 20B in a foam cushion 12 having a single recess 34 on one side of the aperture 22, the recess being separated from the aperture by a single flexible block 38 of the foam cushion material. The second mounting arrangement 20B is otherwise the same as the first mounting arrangement 20A described above and functions in a similar manner. The upper surface 52 of the block 38 may be lower than the uppermost surface 26 of the foam cushion outside the recess 34 and aperture 22, so that a recessed pocket is formed in the uppermost surface of the cushion for the seat belt buckle to sit in. Figure 6 also shows an alternative shaping at the bottom of slot 22, incorporating two tapered surfaces 22T which make it easier to draw buckle 14 through cushion 12.

In a vehicle in which the rear seat defines three seating surfaces, the cushion 10 may have two seat belt buckle mounting arrangements, one 20A configured in accordance with the first embodiment to mount a pair of seat belt buckles 14a, 14b adjacent to one another between a central seating surface and a first outer seating surface; and another 20B configured in accordance with the second embodiment to mount a single seat belt buckle between the central seating surface and the other of the outer seating surfaces.

In the embodiments described above, the aperture 22 and the recess(es) 34, 36, open at the rear face of the foam cushion 12. However, it is expected that in some embodiments, the outer cover or upholstery will close the aperture 22 at the rear end face so that it cannot be accessed via the rear end face of the cushion. On the upper surface, the outer cover may follow the contour of the recess or recesses; or it may extend across the top of the, or each, recess onto the respective block 38, 40 of foam cushion material before extending down through the aperture 22, as shown by seat covering materials SCM_{A} and SCM_{B} in Figure 7. Where the cover extends across the rear end opening of a recess or aperture or across the upper opening of a recess, it may be reinforced on the inside by an additional internal layer of material SCM_{B}, shown stitched to the cloth upholstery and to the foam cushion at lines RLU (Reinforcing Layer Upper) and RLL in Figure 7. Material SCM_{B} is shown having a different decorative pattern to material SCM_{A}; this is purely for illustrative purposes and would not be done in practice, for aesthetic reasons. RFF stands for Rear Face of Foam. This area may be covered with material; but this is not essential, as this area will not normally be seen by users.

It should also be noted that it is not essential for the aperture 22 and/or the recess(es) to open at the rear end face of the foam cushion. Rather, the aperture 22 and/or the recess(es) may be closed adjacent the rear face 28 of the foam cushion. However, this may depend on how close to the rear end face 28 of the foam cushion the mounting arrangement 20A, 20B has to be positioned; and on whether it is possible to mould the aperture and the, or each, recess without breaking through the rear face. It is anticipated that in some cases the aperture 22 and/or recess(es) would have to be positioned so close to the rear end face of the foam cushion that there would be insufficient material between them and the rear end face 28 of the foam cushion to prevent the aperture/recess breaking through the rear end face when demoulding.

It will be appreciated that the shapes and relative dimensions of the aperture 22 and recesses 34, 36 in the embodiments illustrated are exemplary only; and that many variations are possible without departing from the general inventive concept. This concept is to provide sufficient flexibility in the foam cushion materials adjacent to an aperture 22, that the aperture 22 can expand temporarily to enable a seat belt buckle which is wider than the aperture to be pulled up through the aperture. For example, rather than discrete recesses 34, 36 either side of the aperture 22 in the first mounting arrangement 20A, a single recess could be provided which at least partially encircles the aperture. In this case, the recess may be U shaped so as to extend along sides of the aperture which are opposed in the first direction. Furthermore, the regions or blocks of material 38, 40 in the foam cushion between the aperture and the, or each, recess need not be shaped as a rectangular block; but could be any suitable shape. In a further modification, the recess(es) could be filled or partially filled with a material which is less dense and/or more easily compressible than the foam cushion material immediately surrounding the recess(es).

The mounting arrangements 20A, 20B described above are suitable where it is necessary to feed the seat belt buckle(s) 14 up through the aperture 22, usually from a lower surface of the foam cushion. However, in some applications it may be possible to use a mounting arrangement comprising a slot which is open at the rear face of the upholstered cushion; and to feed the webbing 18 into the slot from the rear without having to pass the buckle through the slot. In this case, the seat belt buckle 14 would be held above the upper surface of the cushion 10 and the webbing 18 passed into the slot as the cushion is fitted.

The above embodiments are described by way of example only. Many variations are possible without departing from the scope of the invention as defined in the appended claims.

## Claims

1. A vehicle (17) comprising a bench type seat having a seat cushion (10) and a webbing type seat belt buckle (14) projecting from the cushion, wherein the cushion (10) comprises an upholstered foam cushion (12), the cushion also comprising a mounting arrangement (20A, 20B) for the seat belt buckle, the mounting arrangement comprising an aperture (22) extending through the upholstered foam cushion (12) and opening at an upper surface of the upholstered foam cushion, through which aperture a webbing strap (18) connecting the seat belt buckle (14) to an anchor point (16) passes, and at least one recess (34, 36) defined in the material of the foam cushion (12) proximal to but spaced from said aperture (22), wherein the aperture has a dimension (Z) measured in a first direction which is less than a corresponding dimension (W) of the seat belt buckle (14) when the material (38, 40) of the foam cushion (12) between the aperture (22) and the at least one recess (34, 36) is in an initial configuration, the material (38, 40) of the foam cushion (12) between the aperture (22) and the at least one recess (34, 36) being resiliently deformable from its initial configuration to increase said dimension (Z) of the aperture (22) in said first direction.

2. A vehicle (17) as claimed in claim 1, configured such that in use when assembling the seat cushion (10) to the vehicle, the material (38, 40) of the foam cushion (12) between the aperture (22) and the at least one recess (34, 36) is able to deform resiliently from its initial configuration to allow the seat belt buckle (14) to pass through the aperture, the material (38, 40) of the foam cushion (12) between the aperture (22) and the at least one recess (34, 36) returning to its initial configuration once the seat belt buckle (14) has passed fully through the aperture (22).

3. A vehicle (17) as claimed in claim 1 or claim 2, wherein the arrangement is configured such that, in use, the material of the foam cushion (12) surrounding the aperture (22) resists entry of the seat belt buckle (14) into the aperture from above.

4. A vehicle (17) as claimed in any one of claims 1 to 3, wherein an upper surface (52, 54) of the material (38, 40) of the foam cushion (12) between the aperture (22) and the recess (34, 36) is spaced below an uppermost surface (26) of the foam cushion (12) surrounding the at least one recess.

5. A vehicle (17) as claimed in any one of the preceding claims, wherein the at least one recess consists of a single recess (34) extending along at least one side of the aperture (22).

6. A vehicle (17) as claimed in any one of claims 1 to 4, wherein the at least one recess comprises a pair of recesses (34, 36) defined in the material of the foam cushion (12), one either side of the aperture (22) in said first direction.

7. A vehicle (17) as claimed in any one of claims 1 to 6, the vehicle having a plurality of webbing type seat belt buckles (14) projecting from the cushion (10), the cushion having a plurality of mounting arrangements (20A, 20B).

8. A vehicle (17) as claimed in claim 7, wherein an adjacent pair of seat belt buckles (14) are mounted using a common mounting arrangement (20A).

9. A method of assembling a bench type seat cushion (10) into a vehicle (17) as claimed in any one of claims 1 to 8, the method comprising: inserting the seat belt buckle (14) into the aperture (22) and pulling the seat belt buckle (14) upwardly through the aperture (22) as the cushion (10) is moved into position in the vehicle (17) until the buckle (14) emerges from the aperture (22) with the cushion (10) located in a desired position in the vehicle (17).

10. A vehicle (17) comprising a bench type seat having a seat cushion (10) and at least one webbing type seat belt buckle (14) projecting from the cushion (10), wherein the cushion comprises an upholstered foam cushion (12), the cushion also comprising a mounting arrangement (20A, 20B) for the webbing type seat belt buckle (14), the mounting arrangement comprising a slot (22) extending through the upholstered foam cushion (12) and opening at a rear end face (28) of the upholstered foam cushion (12) through which the webbing strap (18) connecting the seat belt buckle (14) to an anchor point (16) passes, and wherein the slot (22) has at least one dimension (Z) that is smaller than a corresponding dimension (W) of the seat belt buckle (14).

11. A vehicle (17) as claimed in claim 10, wherein a recessed pocket for receiving the seat belt buckle (14) is defined in the uppermost surface (26) of the upholstered foam cushion (12) surrounding the slot (22).

12. A vehicle (17) as claimed in claim 10 or claim 11, wherein the bench type seat cushion (10) defines three seating surfaces, comprising a central seating surface and an outer seating surface on either side of the central seating surface; the cushion (10) comprising respective mounting arrangements (20A, 20B) located between the central seating surface and each of the outer seating surfaces, and wherein at least one webbing type seat belt buckle (14) is received in each mounting arrangement (20A, 20B).

13. A seat cushion (10) for a bench type seat in an associated vehicle (17), wherein the seat cushion (10) comprises an upholstered foam cushion (12), the cushion also comprising a mounting arrangement (20A, 20B) for a webbing type seat belt buckle (14), the mounting arrangement (20A, 20B) comprising a slot (22) extending through the upholstered foam cushion (12) and opening at a rear end face (28) of the upholstered cushion (12).

14. A seat cushion (10) as claimed in claim 13, wherein a recessed pocket for receiving the webbing type seat belt buckle (14) of the associated vehicle (17) is defined in the uppermost surface (26) of the upholstered foam cushion (12) surrounding the slot (22).

15. A method of assembling a bench type seat cushion (10) into a vehicle (17) as claimed in any one of claims 10 to 12, the method comprising: positioning the seat belt buckle (14) above an upper surface of the cushion (10) and feeding the webbing strap (18) into the slot (22) as the cushion (10) is moved into position in the vehicle (17) until the cushion (10) is located in a desired position in the vehicle (17) with the buckle (14) supported on the cushion (10) above the slot (22).
